# EUROPÄISCHE PATENTSCHRIFT

(11) **EP 0 733 001 B1**
(45) Veröffentlichungstag und Bekanntmachung des Hinweises auf die Patenterteilung: **16.09.1998**
(21) Anmeldenummer: 95902792.1
(22) Anmeldetag: 12.12.1994
(51) Int. Cl.: B60H 1/24

(54) **STELLVORRICHTUNG FÜR EINE LUFTSTRÖMUNGSKLAPPE**
SETTING DEVICE FOR A VENTILATION FLAP
SYSTEME D'AJUSTEMENT POUR UN VOLET D'ECOULEMENT D'AIR

(30) Priorität: 18.12.1993 DE 4343385
(43) Veröffentlichungstag der Anmeldung: 25.09.1996
(73) Patentinhaber: Behr GmbH & Co., D-70469 Stuttgart (DE); SAIA AG, CH-3280 Murten (CH)
(72) Erfinder: BOILLAT, Pierre, CH-3280 Murten (CH); MARTIN, Ralf, D-71726 Benningen (DE); PORTMANN, Urs, CH-1752 Villars-sur-Glane (CH); RICHTER, Christian, D-01257 Dresden (DE); SCHOLZ, Rudolf, D-01219 Dresden (DE); SECZER, Leopold, D-71729 Erdmannshausen (DE)
(74) Vertreter: Riedel, Peter, Dipl.-Ing.
(86) Internationale Anmeldenummer: EP9404120
(87) Internationale Veröffentlichungsnummer: WO9516582

(56) Entgegenhaltungen:
- DE-A- 2 817 297
- DE-A- 3 047 426
- DE-A- 3 110 949
- DE-A- 3 806 307

## Beschreibung

Die Erfindung betrifft eine Stellvorrichtung für eine Strömungsklappe in einem Luftführungskanal, insbesondere in einer Heizungs- und Belüftungsanlage eines Kraftfahrzeuges nach dem Oberbegriff des Anspruches 1.

Strömungsklappen werden in den Luftführungskanälen von Heizungs- und Belüftungsanlagen bzw. Klimaanlagen in einem Kraftfahrzeug eingesetzt und meist über Bowdenzugantriebe oder mechanische Übersetzungen verstellt.

Es ist bekannt, die Strömungsklappen über einen Elektromotor zu verstellen, wobei im Bereich des Armaturenbrettes eine entsprechende Steuereinheit für den Elektromotor angeordnet ist. In dieser Steuereinheit sind vom Benutzer zu verstellende Sollwertgeber für die Drehwinkel der Klappe vorgesehen, wobei über die Elektronik der zugeordnete Elektromotor entsprechend der Sollwertvorgabe verstellt wird.

In einem Kraftfahrzeug sind mehrere Strömungsklappen angeordnet, die in der Regel unterschiedliche Drehrichtungen aufweisen und oft auch über unterschiedliche Drehwinkelbereiche zu verstellen sind. Daher ist jeder Elektromotor von der Steuereinheit in entsprechender Weise zu betätigen.

Bei der Montage mehrerer, jeweils durch Elektromotoren verstellbarer Strömungsklappen muß darauf geachtet werden, daß die jeweiligen Steuerungsausgänge den jeweiligen Elektromotoren richtig zugeordnet sind. Ein Vertauschen der Anschlußleitungen kann zwar bei einer Funktionsprüfung erkannt werden, hierbei besteht jedoch die Gefahr einer Beschädigung der Strömungsklappe bzw. des Elektromotors, wenn z. B. aufgrund falscher Zuordnung der Elektromotor über einen zulässigen Drehwinkelbereich hinaus verstellt wird.

Der Erfindung liegt die Aufgabe zugrunde, eine gattungsgemäße Stellvorrichtung derart weiterzubilden, daß bei erleichterter Montage und hoher Funktionssicherheit eine elektromechanische Verstellung einer Strömungsklappe erzielt ist.

Die Aufgabe wird erfindungsgemäß nach den kennzeichnenden Merkmalen des Anspruches 1 gelöst.

Der als Schrittmotor ausgebildete Elektromotor wird von den Ausgangsimpulsen der Steuereinheit angesteuert, wobei jedem Elektromotor eine Steuereinheit benachbart liegt, welche Codiereingänge zur Auswahl der Drehrichtung und/oder des Drehwinkels aufweist. Der Schrittmotor und die Steuereinheit werden im Bereich der Strömungsklappe angeordnet, so daß die Steuereinheit lediglich mit einem im Amaturenbrett des Kraftfahrzeuges angeordneten Geber zu verbinden ist. Der mit der Steuereinheit körperlich verbundene Schrittmotor ist unabhängig von seinem Einsatzort gleich ausgebildet; die Anpassung an seinen Einsatzort, d.h. die für den Einsatzort vorgegebene Drehrichtung sowie der Drehwinkel, wird durch die Belegung der Codiereingänge erzielt. In einer Heizungs- und Belüftungsanlage bzw. Klimaanlage sind somit immer gleiche Baueinheiten aus Schrittmotor und Steuereinheit verwendet, so daß sowohl ein Austausch der Motoren untereinander als auch ein einfaches Ersetzen eines Motors möglich ist. Der Steuereinheit werden die Sollwert vorgebenden Eingangssignale in analoger Form zugeführt und von dieser in Ausgangsimpulse umgesetzt, welche in bekannter Weise zur Steuerung des Schrittmotors eingesetzt werden. Diese bevorzugt digitalen Impulse bewirken die Verstellung des Elektromotors und damit eine entsprechende Verstellung der Strömungsklappe in Einzelschritten vorgebbaren Drehwinkels.

In bevorzugter Ausführungsform ist der Schrittmotor und die ihm zugeordnete Steuereinheit in einem gemeinsamen Gehäuse angeordnet. Bevorzugt ist die Steuereinheit im Gehäuse des Schrittmotors angeordnet.

Die Anschlüsse der Steuereinheit, d.h. die Spannungsversorgung, die Sollwertanschlüsse und die Codieranschlüsse sind bevorzugt als Steckanschlüsse ausgebildet, die insbesondere hinter einem Gehäusefenster des gemeinsamen Gehäuses liegen. Auf die Steckanschlüsse ist ein bevorzugt einteiliger Stecker aufsetzbar, welcher - z. B. durch Kerben, Vorsprünge o. dgl. - lagerichtig in das Fenster einzuführen ist und mit dessen Aufstecken die Spannungsversorgung, die Anschlüsse zum Sollwertgeber und die Codierung der Steuereinheit bzw. des Schrittmotors vorgeben ist. Ein mit einer Reparatur oder einer Wartung beauftragter Service-Techniker kann einen ihm zur Verfügung stehenden Austauschmotor an beliebiger Stelle der Heizungs- und Belüftungsanlage montieren, wobei durch Aufstecken des Steckers auf die Steckanschlüsse dem Schrittmotor seine Drehrichtung sowie sein möglicher Drehwinkel über die Codiereingänge mitgeteilt wird.

Weitere Merkmale der Erfindung ergeben sich aus den weiteren Ansprüchen, der Beschreibung und der Zeichnung, in der ein nachfolgend im einzelnen beschriebenes Ausführungsbeispiel der Erfindung dargestellt ist. Es zeigen:
- Fig. 1: eine schematische Darstellung einer erfindungsgemäßen Stellvorrichtung für eine Strömungsklappe,
- Fig. 2 bis 5: Stellvorrichtungen nach Fig. 1 in unterschiedlicher Beschaltung der Codiereingänge,
- Fig. 6: eine Ansicht auf eine Baueinheit der erfindungsgemäßen Stellvorrichtung von der Anschlußseite her,
- Fig. 7: einen Schnitt längs der Linie VII-VII in Fig. 6,
- Fig. 8: eine Draufsicht auf eine erfindungsgemäße Stellvorrichtung.

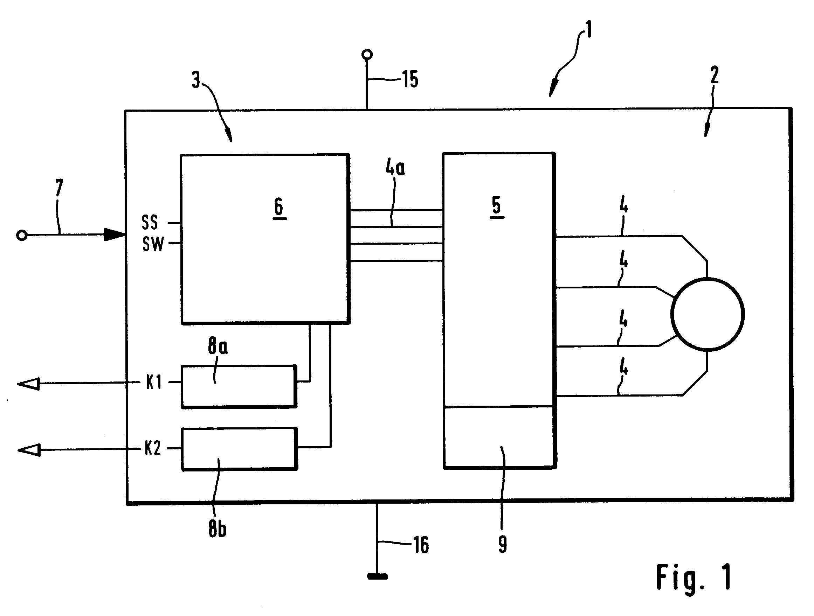

Die in Fig. 1 schematisch dargestellte Stellvorrichtung 1 besteht aus einer Steuereinheit 3 und einem Elektromotor 2, der im Ausführungsbeispiel als Schrittmotor ausgebildet ist. Der Schrittmotor 2 wird über Steuerleitungen 4 von einer Leistungsstufe 5 angesteuert, welche von einer Steuerschaltung 6 gesteuert ist. Der Steuerschaltung 6 ist über eine Eingangsleitung 7 ein Sollwertsignal für die Drehwinkellage des Schrittmotors 2 aufgeschaltet. Über Codierstufen 8a, 8b sind der Steuerschaltung 6 Drehrichtung und zulässiger Drehwinkelbereich mitgeteilt. Die Codierstufen 8a, 8b werden über Codiereingänge K1, K2 beschaltet. Über die Anschlußklemmen 15 und 16 liegt an der Steuereinheit 3 die notwendige Versorgungsspannung an; der Schrittmotor 2 wird über die Steuereinheit 3 mit elektrischer Energie versorgt.

Das über der Eingangsleitung 7 der Steuereinheit 3 bzw. der Steuerschaltung 6 mitgeteilte analoge Eingangssignal gibt die gewünschte Drehwinkelstellung des Schrittmotors 2 wieder. Dieses Eingangssignal wird von der Steuerschaltung 6 in Ausgangsimpulse bzw. digitale Ausgangssignale umgesetzt und über Verbindungsleitungen 4a sowie die Leistungsstufe 5 über Steuerleitungen 4 zum Betrieb des Elektromotors 2 ausgewertet. Die digitalen Ausgangssignale der Steuerschaltung 6 berücksichtigen die über die Codiereingänge K1 und K2 eingeprägten Werte für die Drehrichtung sowie den maximalen Drehwinkel, d.h. den zulässigen Verstellbereich der Strömungsklappe.

Die Steuereinheit 2 ist ferner mit einem elektronischen Selbstdiagnosekreis 9 versehen, dessen Funktion insbesondere in der europäischen Patentanmeldung 93810805.7 (EP-A-0 654 892) der Anmelderin SAIA beschrieben ist.

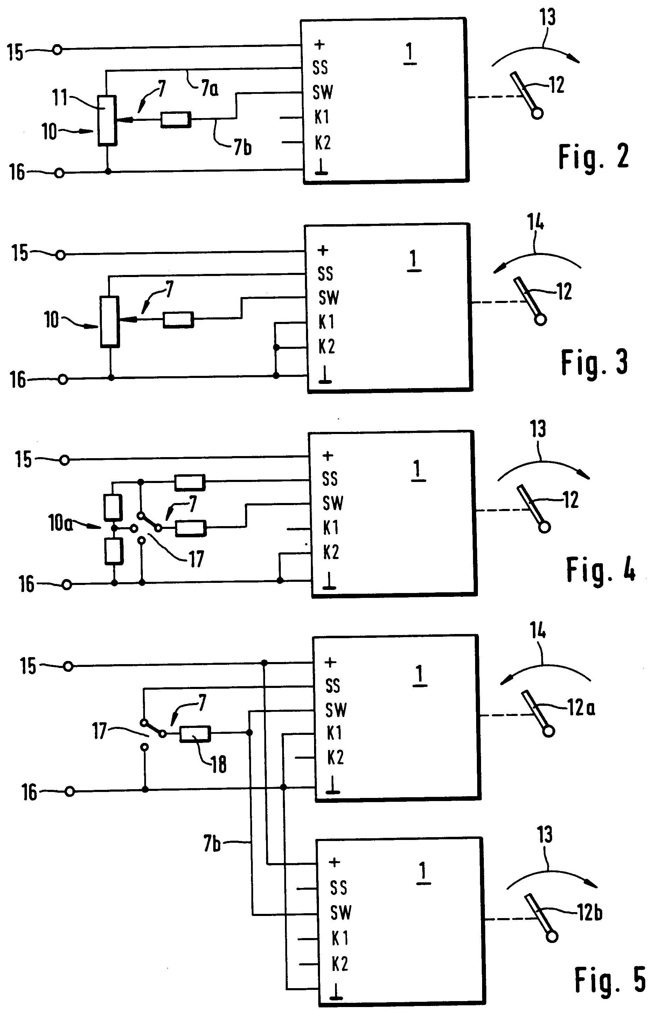

In den Fig. 2 bis 5 sind Beschaltungsbeispiele der erfindungsgemäßen Stellvorrichtung gezeigt. Die Eingangsleitung 7 ist durch einen Spannungsteiler 10 gebildet, dessen Mittenabgriff 7b an der Klemme SW liegt, während die Klemme SS über den Regelwiderstand 11 auf Masse (Klemme 16) liegt.

Die Codiereingänge K1 und K2 liegen offen, wodurch der Elektromotor eine Drehrichtung aufweist, durch die die Strömungsklappe 12 in Pfeilrichtung 13 im Uhrzeigersinn aus ihrer Ruhestellung verstellbar ist. Der aus der gezeigten Ruhestellung mögliche Verstellwinkel im Uhrzeigersinne (Pfeil 13) beträgt z.B. 70°.

Im Ausführungsbeispiel nach Fig. 3 sind die Klemmen SS/SW der Eingangsleitung 7 mit dem Spannungsteiler 10 gemäß Fig. 2 beschaltet. Die Codiereingänge K1 und K2 liegen beide auf Masse (Klemme 16), wodurch sich eine Verstellrichtung der Strömungsklappe 12 aus der in Fig. 3 dargestellten Ruhelage im Gegenuhrzeigersinne gemäß Pfeil 14 ergibt. Der mögliche Verstellwinkel der Strömungsklappe 12 aus der gezeigten Ruhestellung heraus beträgt etwa 100°.

Im Ausführungsbeispiel gemäß Fig. 4 ist anstelle eines kontinuierlich verstellbaren Spannungsteilers in den Fig. 2 und 3 ein schaltbarer Spannungsteiler 10a vorgesehen, wodurch unterschiedliche Spannungspotentiale zwischen den Klemmen SS/SW schaltbar sind. Im gezeigten Ausführungsbeispiel weist der Schalter 17 drei Schaltstellungen auf, durch die jeweils vorgegebene Drehwinkellagen des Schrittmotors und damit Verstellwinkellagen der von dem Schrittmotor verstellten Strömungsklappe 12 möglich sind. Der Codiereingang K2 liegt auf Masse, während der Codiereingang K1 offen ist. Durch diese Codierung ergibt sich eine Drehrichtung aus der dargestellten Ruhelage heraus im Uhrzeigersinne gemäß Pfeil 13 mit einem möglichen Verstellwinkel der Strömungsklappe 12 von etwa 90°. Die Verstellbewegung erfolgt zwischen drei durch den Schalter 17 vorgegebenen Stellungen, welche durch die Wahl der Ohmschen Widerstände des Spannungsteilers 10a vorgebbar sind.

Im Ausführungsbeispiel nach Fig. 5 ist der Regelzweig 7b der Eingangsleitung 7 auf die Eingänge SW zweier parallel nebeneinanderliegender Stellvorrichtungen 1 geschaltet und über einen Ohmschen Widerstand 18 und einen Schalter 17 entweder auf Masse (Klemme 16) oder auf den Eingang SS der Stellvorrichtung 1 zu legen. Der Codiereingang K1 der ersten Stellvorrichtung 1 liegt auf Masse, während deren Codiereingang K2 sowie die Codiereingänge K1 und K2 der zweiten Stellvorrichtung offen liegen. Damit ergibt sich für die von der ersten Stellvorrichtung angesteuerte Strömungsklappe 12a eine Drehrichtung entgegen Uhrzeigersinn und für die von der zweiten Stellvorrichtung betätigte Strömungsklappe 12b eine Stellbewegung im Uhrzeigersinne (Pfeil 13). Durch die gewählte Codierung sind beide Strömungsklappen 12a und 12b aus ihrer Ruhelage über einen Verstellwinkel von 70° verstellbar, wobei der Schalter 17 entweder die eine Endlage der Strömungsklappen 12a und 12b oder die andere Endlage der Strömungsklappen 12a und 12b bestimmt.

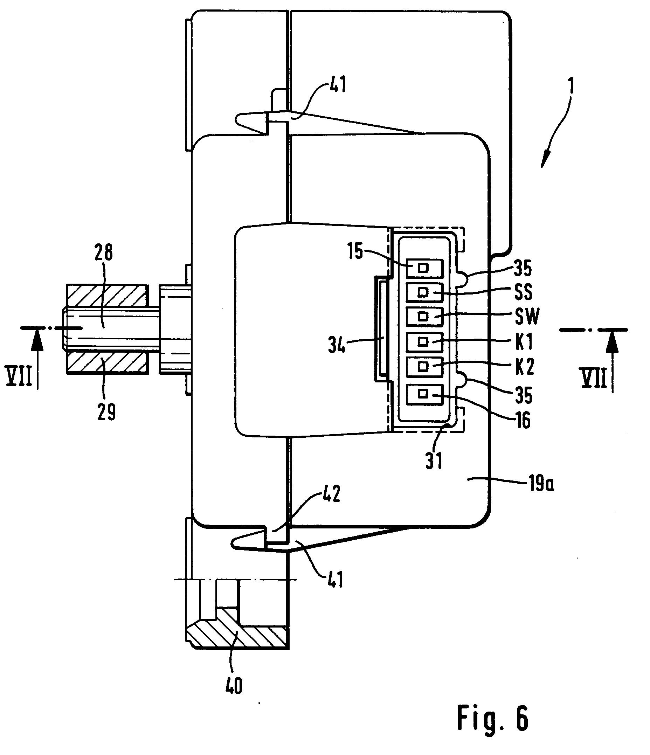

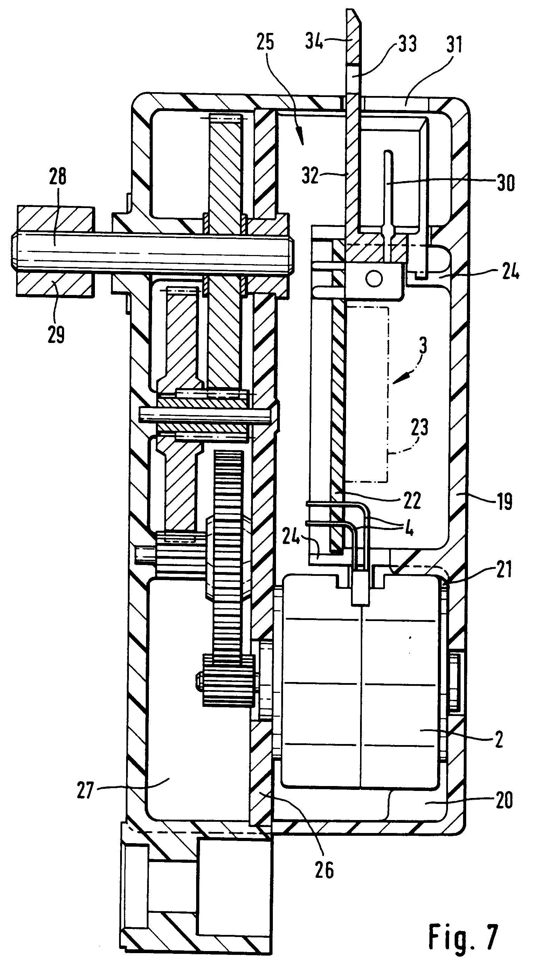

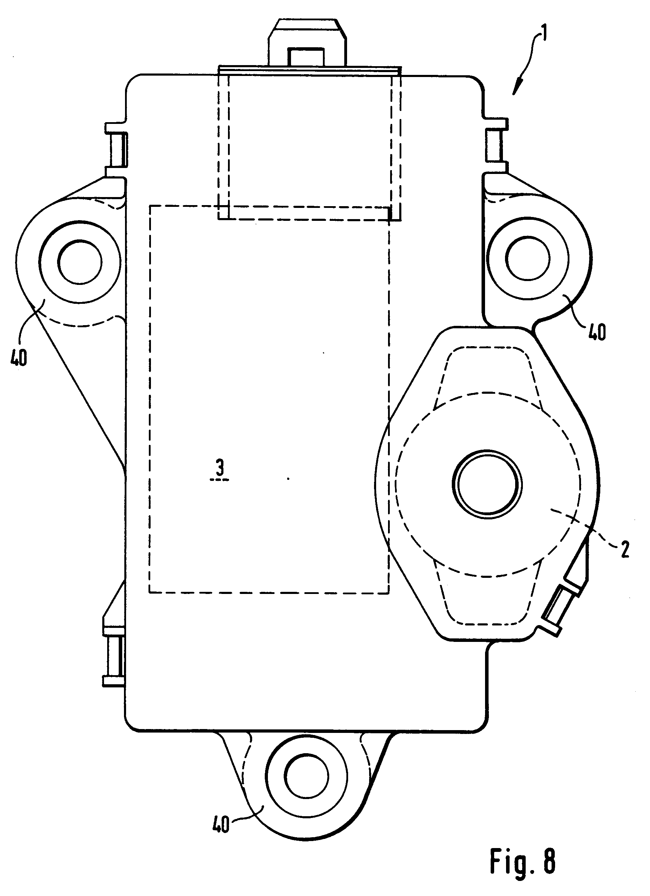

In den Fig. 6 bis 8 ist eine konstruktiv ausgeführte Stellvorrichtung gezeigt. Wie insbesondere aus dem Schnitt in Fig. 7 ersichtlich, ist der Schrittmotor 2 in Auflagern 20, 21 eines Gehäuses 19 gehalten, wobei die Steuerleitungen 4 des Schrittmotors 2 unmittelbar in eine Platine 22 eingelötet sind, welche die Steuereinheit 3 trägt. Die Steuereinheit 3 kann als diskrete elektronische Schaltung ausgeführt sein oder auch durch einen Mikroprozessor 23 gebildet werden. Die benachbart zum Schrittmotor 2 angeordnete Steuereinheit 3 ist in entsprechenden Aufnahmen 24 des Gehäuses 19 fest gehalten. Bevorzugt liegt der Schrittmotor 2 und die Steuereinheit 3 in einem gemeinsamen Aufnahmeraum 25, der durch eine Trennwand 26 von einem Getrieberaum 27 geteilt ist, in den die Antriebswelle des Schrittmotors 2 ragt. Das Getriebe besteht im gezeigten Ausführungsbeispiel aus Zahnräderpaarungen, über die die notwendige Verstellkraft aufgebracht wird. Eine eventuell notwendige Unter- bzw. Übersetzung kann vorgesehen sein. Die Ausgangswelle 28 des Getriebes ist über eine angedeutete Kupplung 29 mit der Verstellwelle der Strömungsklappe 12, 12a bzw. 12b verbunden.

Die Gehäuseteilungsebene liegt bevorzugt auf der Höhe der Trennwand 26, so daß nach Abnehmen eines Gehäusedeckels 19a (Fig. 6) ein Zugriff zum Schrittmotor 2 sowie zur Steuereinheit 3 möglich ist.

Die Anschlußklemmen der Steuereinheit (Versorgungsspannung, Eingangsleitungen, Codiereingänge) liegen bevorzugt an dem dem Schrittmotor 2 gegenüberliegenden Rand der Platine 22 und sind insbesondere als Steckanschlüsse 30 ausgebildet. Die Steckanschlüsse 30 liegen einem Fenster 31 im Gehäuse 19 gegenüber, wobei ein im Aufnahmeraum 25 festgelegtes Sicherungsglied 32 das Fenster 31 durchragt und in seinem freien, aus dem Fenster 31 hervorstehenden Ende 34 eine Rastöffnung 33 vorgesehen ist. Ein durch das Fenster 31 auf die Steckanschlüsse 30 zur Herstellung der elektrischen Verbindungen aufsteckbarer Stecker weist ein in die Rastöffnung 33 eingreifendes Rastmittel auf, wodurch der Stecker unverlierbar auf den Steckanschlüssen 30 gehalten ist.

In dem dem Sicherungselement 32 gegenüberliegenden Rand des Fensters 16 sind Ausnehmungen 35 vorgesehen, in die entsprechende Vorsprünge des nicht dargestellten Steckers eingreifen. Die Ausnehmungen 35 gewährleisten ein lagerichtiges Aufstecken auf die Steckanschlüsse 30, wodurch in jedem Fall eine ordnungsgemäße elektrische Verbindung gewährleistet ist.

Die durch Aufstecken des Steckers betriebsfertig zu installierende Stellvorrichtung 1 weist an dem das Getriebe aufnehmenden Gehäuseteil Befestigungsohren 40 auf. Bevorzugt sind drei Befestigungsohren 40 an das insbesondere aus Kunststoff hergestellte Gehäuse angespritzt, weshalb auch bei montierter Stellvorrichtung nach Lösen des Deckels 19a ein Zugang zu der elektrischen Antriebseinheit sowie der Steuereinheit möglich ist. Der Deckel 19a (Fig. 6) übergreift mit Rastmitteln 41 eine entsprechend ausgebildete Rastkante 42 des unteren, das Getriebe aufnehmenden Gehäuseteils.

Unabhängig von dem Einsatzort kann jeweils die gleiche Stellvorrichtung 1 verwendet werden, wobei durch die Beschaltung der Codiereingänge K1, K2 die Drehrichtung wie der Drehwinkel des Schrittmotors und damit die Verstellrichtung und der Verstellwinkel der von dem Schrittmotor betätigten Strömungsklappe 12, 12a, 12b bestimmt ist. Insbesondere ist mit der erfindungsgemäßen Stellvorrichtung eine synchrone oder asynchrone Steuerung paralleler Strömungsklappen in einfacher Weise möglich. Es können auch mehrere Codiereingänge K1 und K2 vorgesehen werden, insbesondere ist ein Bit-Schalter o. dgl. einsetzbar. Bei einem 4-Bit-Schalter sind 16 unterschiedliche Positionen codierbar.

Der in Fig. 1 dargestellte Diagnosekreis 9 kann einerseits die Steuereinheit 3 auf elektrische Fehler überprüfen; andererseits besteht die Möglichkeit, daß über den Diagnosekreis 9 von der Steuereinheit selbsttätig erkennbar ist, welcher Endlage die momentane Verstellage der Strömungsklappe am nächsten liegt. Wird die Stellvorrichtung stromlos, erfolgt eine Rückstellung der Strömungsklappe in die nächstliegende Endlage, so daß bei Wiederinbetriebnahme die vor Außerbetriebsstellung vorliegenden Lagen der Strömungsklappen in kürzester Zeit wieder erreicht sind.

## Patentansprüche

1. Stellvorrichtung für eine Strömungsklappe (12, 12a, 12b) in einem Luftführungskanal, insbesondere in einer Heizungs- und Belüftungsanlage eines Kraftfahrzeuges, mit einem Stellbewegungen ausführenden Elektromotor (2) und einer Steuereinheit (3) für den Elektromotor (2),
dadurch gekennzeichnet, daß der Elektromotor ein Schrittmotor (2) ist, der von Ausgangsimpulsen einer dem Schrittmotor (2) benachbarten Steuereinheit (3) angesteuert ist, und die Steuereinheit (3) Codiereingänge (K1, K2) zur Auswahl der Drehrichtung und/oder des Drehwinkels aufweist.

2. Stellvorrichtung nach Anspruch 1,
dadurch gekennzeichnet, daß der Steuereinheit (3) analoge Eingangssginale zugeführt sind.

3. Stellvorrichtung nach Anspruch 1 oder 2,
dadurch gekennzeichnet, daß der Schrittmotor (2) und die Steuereinheit (3) in einem gemeinsamen Gehäuse (19) angeordnet sind.

4. Stellvorrichtung nach einem der Ansprüche 1 bis 3,
dadurch gekennzeichnet, daß die Steuereinheit (3) im Gehäuse des Schrittmotors (2) angeordnet ist.

5. Stellvorrichtung nach einem der Ansprüche 1 bis 4,
dadurch gekennzeichnet, daß der Elektromotor (2) über ein Getriebe die Strömungsklappe (12, 12a, 12b) antreibt und der Elektromotor (2) sowie die Steuereinheit (3) in einem von dem Getriebe getrennten Aufnahmeraum (25) des gemeinsamen Gehäuses (19) angeordnet sind.

6. Stellvorrichtung nach einem der Ansprüche 1 bis 5,
dadurch gekennzeichnet, daß die Anschlüsse (15, 16, SS, SW, K1, K2) der Steuereinheit (3) als Steckanschlüsse (30) ausgebildet sind.

7. Stellvorrichtung nach einem der Ansprüche 1 bis 6,
dadurch gekennzeichnet, daß die Anschlüsse (15, 16, SS, SW, K1, K2) der Steuereinheit (3) hinter einem Gehäusefenster (31) des gemeinsamen Gehäuses (19) liegen.

8. Stellvorrichtung nach einem der Ansprüche 1 bis 7,
dadurch gekennzeichnet, daß das analoge Eingangssignal von einem Ohmschen Spannungsteiler (10, 10a) abgegriffen ist.

9. Stellvorrichtung nach einem der Ansprüche 1 bis 8,
dadurch gekennzeichnet, daß die Steuereinheit ein Mikroprozessor (23) ist.

10. Stellvorrichtung nach einem der Ansprüche 1 bis 9,
dadurch gekennzeichnet, daß die Steuereinheit (3) einen Selbstdiagnosekreis (9) aufweist.

## Claims

1. An adjusting device for a flux valve (12, 12a, 12b) in an air delivery passage, in particular in a heating and venting system of a motor vehicle, with an electric motor (2) to operate the adjusting movements and a control unit (3) for the electric motor (2), characterised in that the electric motor is a stepper motor (2), which is controlled by output pulses of a control unit (3) adjacent to the stepper motor (2) and the control unit (3) has coding inputs (K1, K2) for selecting the direction of rotation and/or angle of rotation.

2. An adjusting device as claimed in claim 1,
characterised in that analogue input signals are applied to the control unit (3).

3. An adjusting device as claimed in claim 1 or 2,
characterised in that the stepper motor (2) and the control unit (3) are arranged in a same housing 19).

4. An adjusting device as claimed in one of claims 1 to 3,
characterised in that the control unit (3) is arranged in the housing of the stepper motor (2).

5. An adjusting device as claimed in one of claims 1 to 4,
characterised in that the electric motor (2) drives the flux valve (12, 12a, 12b) via a gear and the electric motor (2) and the control unit (3) are arranged in a housing chamber (25) of the common housing (19) separated from the gear.

6. An adjusting device as claimed in one of claims 1 to 5,
characterised in that the terminals (15, 16, SS, SW, K1, K2) of the control unit are provided as plug-in terminations (30).

7. An adjusting device as claimed in one of claims 1 to 6,
characterised in that the terminals (15, 16, SS, SW, K1, K2) of the control unit (3) are arranged behind a housing window (31) of the common housing (19).

8. An adjusting device as claimed in one of claims 1 to 7,
characterised in that the analogue input signal is branched off from an ohmic voltage divider (10, 10a).

9. An adjusting device as claimed in one of claims 1 to 8,
characterised in that the control unit is a microprocessor (23).

10. An adjusting device as claimed in one of claims 1 to 9,
characterised in that the control unit (3) has a self-diagnosis circuit (9).

## Revendications

1. Dispositif de positionnement pour un volet de commande d'écoulement (12, 12a, 12b) placé dans un canal de guidage d'air, en particulier dans une installation de chauffage et de ventilation de véhicule automobile, comprenant un moteur électrique (2) qui exécute des mouvements de positionnement et une unité de commande (3) pour le moteur électrique (2),
caractérisé en ce que le moteur électrique est un moteur pas-à-pas (2) qui est commande par des impulsions de sortie d'une unité de commande (3) placée à proximité du moteur pas-à-pas (2), et l'unité de commande (3) présente des entrées de codage (K1, K2) pour la sélection du sens de rotation et/ou de l'angle de rotation.

2. Dispositif de positionnement selon la revendication 1,
caractérisé en ce que l'unité de commande (3) reçoit des signaux d'entrée analogiques.

3. Dispositif de positionnement selon la revendication 1 ou 2,
caractérisé en ce que le moteur pas-à-pas (2) et l'unité de commande (3) sont agencés dans un boîtier commun (19).

4. Dispositif de positionnement selon une des revendications 1 à 3,
caractérisé en ce que l'unité de comande (3) est agencée dans le boîtier du moteur pas-à-pas (2).

5. Dispositif de positionnement selon une des revendications 1 à 4,
caractérisé en ce que le moteur électrique (2) entraîne le volet de commande d'écoulement (12, 12a, 12b) par l'intermédiaire d'un mécanisme de transmission et le moteur électrique (2) et l'unité de commande (3) sont agencés dans une chambre de logement (25) du boîtier commun (19) qui est séparée du mécanisme de transmission.

6. Dispositif de positionnement selon une des revendications 1 à 5,
caractérisé en ce que les connexions (15, 16, SS, SW, K1, K2) de l'unité de commande (3) sont constituées par des connexions embrochables (30).

7. Dispositif de positionnement selon une des revendications 1 à 6,
caractérisé en ce que les connexions (15, 16, SS, SW, K1, K2) de l'unité de commande (3) se trouvent derrière une fenêtre (31) du boîtier commun (19).

8. Dispositif de positionnement selon une des revendications 1 à 7,
caractérisé en ce que le signal d'entrée analogique est pris sur un diviseur de tension ohmique (10, 10a).

9. Dispositif de positionnement selon une des revendications 1 à 8,
caractérisé en ce que l'unité de commande est un microprocesseur (23).

10. Dispositif de positionnement selon une des revendications 1 à 9,
caractérisé en ce que l'unité de commande (3) comprend un circuit d'autodiagnostic (9).
